Europäisches Patentamt

European Patent Office

Office européen des brevets

(11) Veröffentlichungsnummer: **0 231 782**

**A1**

(12) **EUROPÄISCHE PATENTANMELDUNG**

(21) Anmeldenummer: **87100475.0**

(22) Anmeldetag: **15.01.87**

(51) Int. Cl.4: **H01H 35/18** , H02G 15/013

(30) Priorität: **17.01.86 DE 3601174**

(43) Veröffentlichungstag der Anmeldung:
**12.08.87 Patentblatt 87/33**

(84) Benannte Vertragsstaaten:
**AT BE CH DE ES FR GB IT LI NL SE**

(71) Anmelder: **Reichensperger, Günter**
**Am Strebkamp 24**
**D-4800 Bielefeld 1(DE)**

(72) Erfinder: **Reichensperger, Günter**
**Am Strebkamp 24**
**D-4800 Bielefeld 1(DE)**

(74) Vertreter: **Hoefer, Theodor, Dipl.-Ing.**
**Kreuzstrasse 32**
**D-4800 Bielefeld 1(DE)**

(54) Schwimmerschalter.

(57) Bei einem Schwimmerschalter mit einem an einem Stromzuführungskabel (14) befestigten, einen Elektroschalter enthaltenden Schwimmergehäuse, an dessen Eintritt das Kabel (14) abgedichtet und mittels eines dieses umgebenden Halteringes (19) befestigt ist, der mit einem äußeren Flansch (17) in einer inneren Ringnut (18) des Schwimmergehäuses passend eingesetzt und dort axial abgestützt ist, ist der Haltering (19) mit dem Flansch (17) Teil eines einstückigen Stopfens (15), der von einer an dem Kabel (14) festgelegten Kappe (16) teilweise umgeben und an der Kappe (16) befestigt ist.

Fig.2

EP 0 231 782 A1

### Schwimmerschalter

Die Erfindung betrifft einen Schwimmerschalter mit einem an einem Stromzuführungskabel befestigten, einen Elektroschalter enthaltenden Schwimmergehäuse, an dessen Eintritt das Kabel abgedichtet und mittels eines dieses umgebenden Halterings befestigt ist, der mit einem äußeren Flansch in einer inneren Ringnut des Schwimmergehäuses passend eingesetzt und dort axial abgestützt ist.

Ein solcher Schwimmerschalter enthält im zusammengebauten Zustand einen mit Luft gefüllten Hohlraum, so daß er an der Oberfläche einer Flüssigkeit schwimmt. Durch seine Befestigung an einem flexiblen und mit einem Ende in einem Behälter festgelegten Stromzuführungskabel nimmt der Schwimmerschalter entsprechend der Höhe des Flüssigkeitsstandes in dem Behälter unterschiedliche Lagen ein. Bei der Veränderung seiner Lage kann ein kugelförmiges Gewicht in dem Innengehäuse aus einer Endstellung in die andere rollen, wodurch es auf die Auflagefläche eines Schalthebels gelangt und den Elektroschalter betätigt, oder sich im anderen Fall von der Auflagefläche entfernt, so daß sich die Stellung des Elektroschalters ebenfalls ändert. Der Schwimmerschalter kann also beispielsweise eine Pumpe einschalten, wenn er sich am Boden des leeren Behälters oder auf einem niedrigen Flüssigkeitsniveau befindet. Mit dem Anstieg des Flüssigkeitsspiegels ändert sich die Lage des Schwimmerschalters, der an der Oberfläche - schwimmt, so daß er in einer bestimmten Höhe eine Stellung einnimmt, bei der das Gewicht seine Stellung in dem Innengehäuse wieder ändert und dadurch die Pumpe abschaltet.

Aus der deutschen Offenlegungsschrift 34 20 149 ist ein Schwimmerschalter der eingangs genannten Art bekannt. Das Kabel ist am Eingang des Schwimmergehäuses mit Hilfe mehrerer kompliziert aufgebauter Einzelteile befestigt, die eine Befestigungsvorrichtung bilden. So muß der Haltering an einer Stirnseite des Flansches mehrere segmentförmig ausgebildete, in radialer Richtung federnd angeordnete Greifklauen aufweisen, die mittels eines besonderen axial aufgesteckten Klemmringes an dem Kabel verklemmt sind. Außerdem ist zur Abdichtung auf das Kabel ein besonderer gummielastischer Dichtungsring aufgesteckt, der an der von den Greifklauen abgewandten Stirnseite des Halteringes angeordnet ist. Weiterhin ist ein besonderer Überwurfring erforderlich, der das Kabel umgibt und den Dichtungsring an den Haltering axial andrückt. Diese Befestigungs- und Abdichtungsvorrichtung ist konstruktiv aufwendig. Sie ist ungeeignet, wenn der Schwimmerschalter in seinen Abmessungen unterhalb einer bestimmten Mindestgröße bleibt.

Der Erfindung liegt die Aufgabe zugrunde, einen nach außen absolut dichten Schwimmerschalter mit einer sicheren Zugentlastung für das darin befestigte Stromzuführungskabel zu schaffen, der eine konstruktiv einfach aufgebaute Befestigungs- und Abdichtungsvorrichtung für das Kabel aufweist. Durch diese Vorrichtung soll es auch möglich sein, die Teile für kleinere Schalter herzustellen und in einfacher Weise zusammenzubauen.

Diese Aufgabe wird erfindungsgemäß dadurch gelöst, daß der Haltering mit dem Flansch Teil eines einstückigen Stopfens ist, der von einer an dem Kabel festgelegten Kappe teilweise umgeben und an der Kappe befestigt ist.

Es sind also nur noch zwei Teile erforderlich, nämlich ein Stopfen und eine Kappe. Dabei wird das Kabel in dem Schwimmergehäuse nicht unmittelbar von dem Haltering befestigt gehalten, sondern der Haltering ist einerseits in dem Schwimmergehäuse festgelegt und andererseits an der Kappe befestigt, an der wiederum das Kabel eingeklemmt ist. Das Kabel ist in dem Gehäuse somit über die Kappe und von dort über den Haltering zugentlastet befestigt.

Bevorzugt ist die Kappe von einem Mantel und einem darin angeordneten koaxialen Klemmring als einstückiges Bauteil gebildet.

Die Kappe weist bevorzugt zwischen dem Mantel und dem Klemmring einen Ringraum auf, in dem mehrere von dem Stopfen stirnseitig abstehende, in Umfangsrichtung in Abständen voneinander angeordnete, in radialer Richtung federnd auslenkbare, achsparallele Schnäpper vorgesehen sind. Durch Aufschieben der Kappe auf die Schnäpper des Stopfens, also durch eine Bewegung in axialer Richtung, wird gleichzeitig das Kabel an der Kappe eingeklemmt und die Kappe an dem Haltering befestigt, wobei die Schnäpper unter federnder Auslenkung über Rastkanten der Kappe gleiten und dort einrasten. Dieser Befestigungsvorgang ist daher denkbar einfach durchzuführen.

Durch die erfindungsgemäße Ausbildung des Schwimmerschalters mit einem Stopfen und einer diesen teilweise umgebenden Kappe ist die Herstellung der Einzelteile, die Abdichtung und die Einspannung des Kabels sehr vereinfacht, da nur ein einfaches Ineinanderdrücken dieser Teile die Verbindung und die Dichtung herstellt. Ein umgewolltes Lösen der Einzelteile voneinander oder ein Herausziehen des Kabels ist dadurch verhindert.

Der Schwimmschalter ist vorzugsweise mit einem beweglichen Schaltgewicht wie Kugel ausgestattet, das mit einem Elektroschalter zusammenwirkt.

Bevorzugte Ausführungsformen der Erfindung sind in den Schutzansprüchen enthalten. Der Schutzumfang erstreckt sich nicht nur auf die beanspruchten Einzelmerkmale, sondern auch auf deren Kombination.

Ein Ausführungsbeispiel der Erfindung ist in der Zeichnung dargestellt und wird im folgenden näher beschrieben. Es zeigen:

Fig.1 eine Ansicht eines Schwimmerschalters mit einem aus einer Unterschale und einer Oberschale bestehenden Schwimmergehäuse, in welchem ein Kabel einmündet;

Fig.2 einen axialen Schnitt durch die Befestigungsvorrichtung für das Kabel am Eintrittsbereich des Schwimmergehäuses in gegenüber Fig.2 größerem Maßstab;

Fig.3 eine stirnseitige Ansicht eines Stopfens;

Fig.4 einen Längsschnitt durch den Stopfen gemäß Linie IV-IV der Fig.3;

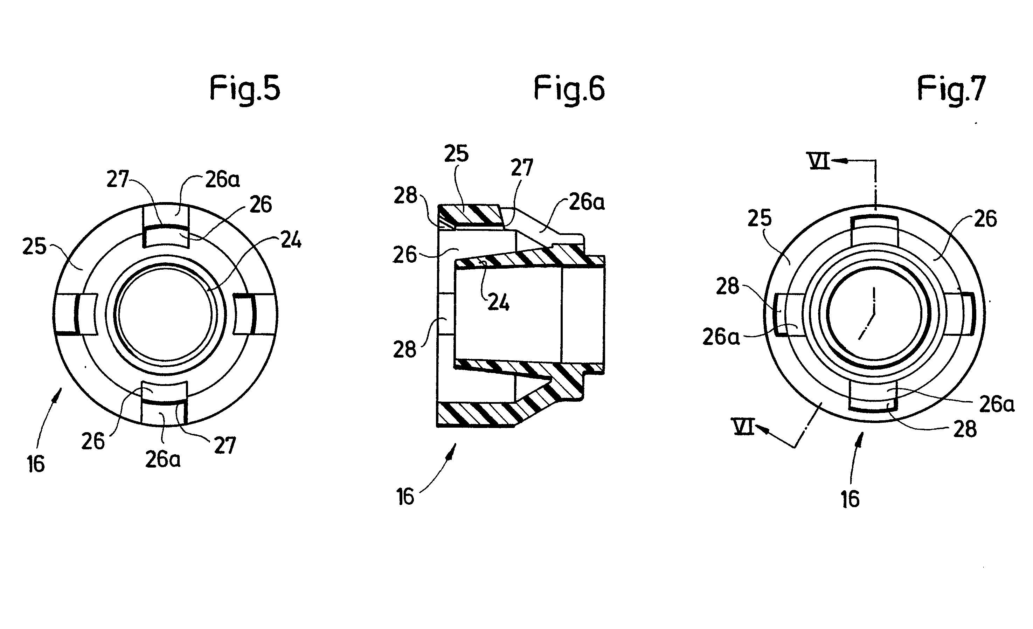

Fig.5 eine Stirnseite einer Kappe, die für das Aufsetzen auf dem Stopfen vorgesehen ist;

Fig.6 einen Längsschnitt durch die Kappe gemäß Linie VI-VI der Fig.7;

Fig.7 die andere Stirnseite der Kappe.

Ein erfindungsgemäßer Schwimmerschalter weist ein Schwimmergehäuse 10 auf, das aus einer Unterschale 11 und einer Oberschale 12 zusammengesetzt ist. Es enthält einen genügend großen, mit Luft gefüllten Hohlraum, der seine Schwimmfähigkeit gewährleistet. Die beiden Schalen 11 und 12 sind längs ihrer Trennfuge 13 zusammengesetzt und an deren Außenseite hier von einer Randabdichtung umgeben. Eine Knickschutztülle für ein Kabel 14 ist im Bereich der Befestigungsvorrichtung in die Randabdichtung mit einbezogen.

Die Befestigungsvorrichtung für das Kabel 14 in dem Schwimmergehäuse 10 zeigt einen Stopfen 15 und eine Kappe 16, die auf den Stopfen 15 teilweise aufgesetzt (ist) wird. Beide Teile sind rotationssymmetrisch und umgeben das im Querschnitt kreisförmige Kabel 16. Der Stopfen 15 ist innerhalb des Schwimmergehäuses 10 befestigt, während die Kappe 16 außerhalb des Schwimmergehäuses 10 auf dem aus dem Gehäuse herausragenden Teil des Stopfens 15 aufgesteckt ist.

Der Stopfen 15 weist im Bereich seiner innerhalb des Schwimmergehäuses 10 befindlichen Stirnseite einen äußeren Flansch 17 auf, mit dem er in einer inneren Ringnut 18 der Unterschale 11 und der Oberschale 12 passend eingesetzt ist. Von dort aus erstreckt sich ein Haltering 19 des Stopfens 15 als zentrales, das Kabel 14 unmittelbar umgebendes Teil des Stopfens 15 axial zur Außenseite des Schwimmergehäuses 10. Hier endet der Aufnahmeraum 20 des Halterings 19 für das Kabel 14 mit einer konischen Innenfläche 21 an der von dem Flansch 17 abgewandten Stirnseite. Die Innenfläche 21 ist von mehreren achsparallelen und in Umfangsrichtung in gleichen Abständen voneinander angeordneten Schnäppern 22 umgeben, die an dem Stopfen 15 stirnseitig abstehen. Jeder Schnäpper 22 weist eine abgeschrägte Gleitfläche 23 an der Außenseite auf.

Die das Kabel 14 umgebende Kappe 16 besteht aus einem Klemmring 24, der unmittelbar an der äußeren Oberfläche des Kabels 14 anliegt, und einem zu dem Klemmring 24 koaxialen und in einem Abstand davon angeordneten Mantel 25. Es wird somit zwischen dem Klemmring 24, der eine äußere konische Oberfläche hat, und dem Mantel 25 ein freier Ringraum 26 gebildet, der an einer Stirnseite der Kappe 16 offen ist. An der anderen Stirnseite geht der Mantel 25 in den Klemmring 24 über, so daß die Kappe 16, ebenso wie der Stopfen 15, ein einstückiges Bauteil ist.

Der Mantel 25 weist als Aufnahmeraum für jeden Schnäpper 22 des Stopfens 15 eine Ausnehmung 26a auf.

Im vorliegenden Ausführungsbeispiel sind an dem Stopfen 15 vier Schnäpper 22 und an der Kappe 16 vier Ausnehmungen 26a angeordnet. Diese Ausnehmungen 26a bilden jeweils Rastkanten 27 an der inneren Oberfläche des Mantels 25, an der die Schnäpper 22 beim Aufstecken der Kappe 16 auf den Stopfen 15 einrasten. Den Ausnehmungen 26a entsprechend sind außerdem an dem Mantel 25 an der inneren Oberfläche konische Gleitflächen 28 vorgesehen, die von der dem Stopfen 15 zugewandten Stirnseite der Kappe 16 ausgehen.

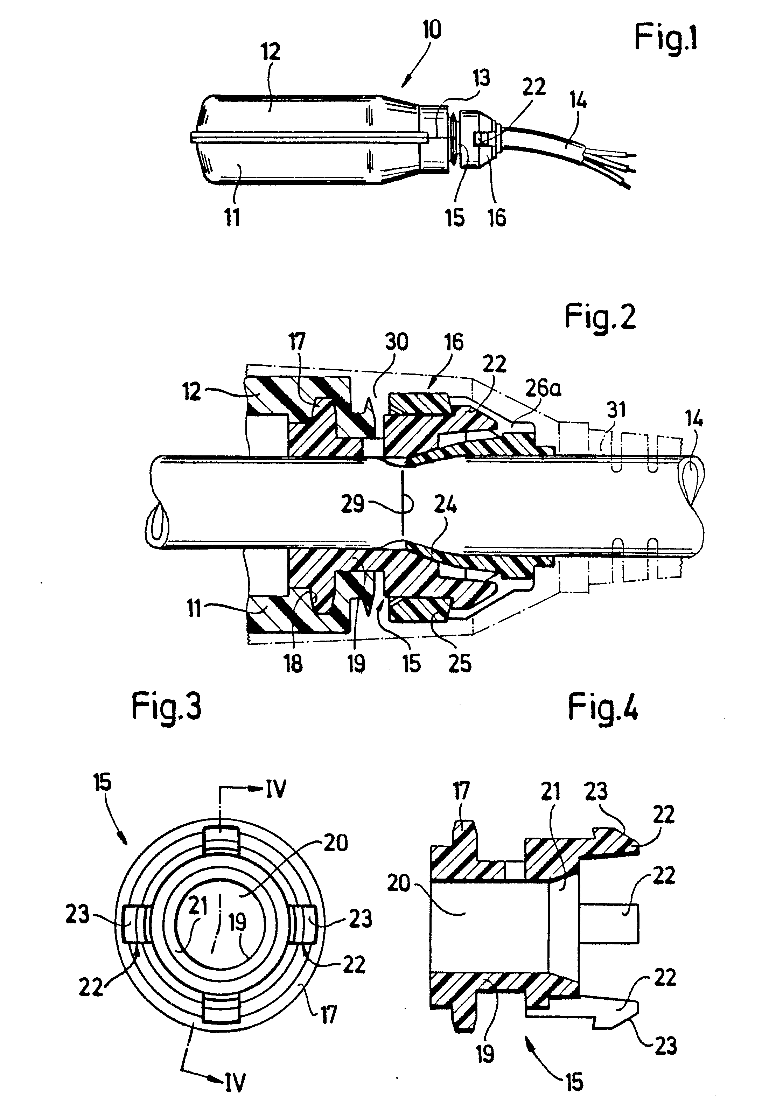

Jeder Schnäpper 22 ist aus einem elastisch federnden Streifen, einer Zungen o.dgl. gebildet, an deren freiem verdickten Ende zurückspringende Widerlagerflächen 23a vorstehen (vgl. Fig.4), die hinter entsprechende Rastkanten 27 des Mantels 25 fassen.

Die Stopfen 15 und/oder die Kappe 16 sind vorzugsweise aus Kunststoff hergestellt.

Wie Fig.2 zeigt, pressen der Stopfen 15 und die teilweise herumfassende Kappe 16 das Kabel an seinem Umfang zusammen, wodurch ein unbeabsichtigtes Herausziehen des Kabels unmöglich ist.

Beim Aufstecken der Kappe 16 auf den Stopfen 15 gelangen zuerst die Gleitflächen 23 der Schnäpper 22 an die konischen Gleitflächen 28 der Kappe 16. Die Schnäpper 22 werden bei der weiteren Bewegung radial nach innen fefernd ausgelenkt und gleiten an der inneren Oberfläche des Mantels 25 entlang, bis sie an den Rastkanten 27 in den Ausnehmungen 26a einrasten. Während dieses Zusammenfügens ist die äußere konische Oberfläche des Klemmringes 24 mit der konischen Innenfläche 27 des Stopfens in Berührung gekommen und dort entlanggeglitten, wobei der Klemmring 24 geringfügig radial zusammengedrückt worden ist, so daß das darin befindliche Kabel 14 unter Bildung einer Einschnürung 29 an der Kappe 16 festgeklemmt ist. Das Kabel 14 ist somit unmittelbar an der Kappe 16 befestigt, die wiederum über die Schnäpper 22 unmittelbar an dem Stopfen 15 und der Stopfen mit Hilfe seines äußeren Flansches 17 unmittelbar an dem Schwimmergehäuse 10 befestigt sind.

Zwischen der Unterschale 11 und der Oberschale 12 einerseits und der Kappe 16 andererseits liegt ein nach außen offener Ringraum 30, der für die Befestigung der das Kabel 14 auf geringer Länge von dem Schwimmergehäuse 10 aus umgebenden Knickschutztülle 31 vorgesehen ist.

Diese Knickschutztülle wird wie folgt aufgebracht: Nachdem die Unterschalte 11 auf die Oberschale 12 aufgesetzt ist, wird in einem Arbeitsgang in einer Form ein elastischer Kunststoff an bzw. in das Schwimmergehäuse 10 gespritzt, so daß sich eine umgehende Randabdichtung von Unterschale und Oberschale und gleichzeitig gleichstückig eine den Eintrittsbereich des Kabels 14 an der Außenseite (Bereich Bezugszeichen 12, 30, 16 und etwas das Kabels 14 selbst) umgebende Knickschutztülle (nicht dargestellt) ergibt, die eine gewisse vorteilhafte Elastizität in diesem Bereich zeigt.

Bei diesem Spritzvorgang wird der Kunststoff in alle zunächst noch nach außen offene Hohlräume dichtend eingedrückt.

**Ansprüche**

1. Schwimmerschalter mit einem an einem Stromzuführungskabel befestigten,einen Elektroschalter enthaltenden Schwimmergehäuse, an dessen Eintritt das Kabel abgebildet und mittels eines dieses ungebenden Halterings befestigt ist, der mit einem äußeren Flansch in einer inn-eren Ringnut des Schwimmergehäuses passend eingesetzt und dort axial abgestützt ist, dadurch gekennzeichnet, daß der Haltering (19) mit dem Flansch (17) Teil eines einstückigen Stopfens (15) ist, der von einer an dem Kabel (14) festgelegten Kappe (16) teilweise umgeben und an der Kappe (16) befestigt ist.

2. Schwimmerschalter nach Anspruch 1, dadurch gekennzeichnet, daß die Kappe (16) von einem Mantel (25) und einem darin angeordneten koaxialen Klemmring (24) als einstückiges Bauteil gebildet ist.

3. Schwimmerschalter nach den Ansprüchen 1 und 2, dadurch gekennzeichnet, daß die Kappe - (16) zwischen dem Mantel (25) und dem Klemmring (24) einen Ringraum (26) bildet, in dem sich mehrere von dem Stopfen (15) stirnseitig abstehende, in Umfangsrichtung in Abständen voneinander angeordnete, in radialer Richtung federnd auslenkbare, achsparallele Schnäpper (22) befinden.

4. Schwimmerschalter nach den Ansprüchen 1 bis 3, dadurch gekennzeichnet, daß die Kappe - (16) als Aufnahmeraum für jeden Schnäpper (22) des Stopfens (15) eine Ausnehmung (26a) in ihrem Mantel (25) aufweist, durch die eine Rastkante (27) für den mit abgeschrägter Gleitfläche (23) versehenen Schnäpper (22) gebildet ist.

5. Schwimmerschalter nach den Ansprüchen 1 bis 4, dadurch gekennzeichnet, daß der Stopfen - (15) mit einer von der Stirnseite der Schnäpper - (22) ausgehenden konischen Innenfläche (21) an der konischen Außenfläche des Klemmringes (24), diesen zusammendrückend und das Kabel (14) verklemmend, anliegt.

6. Schwimmerschalter nach den Ansprüchen 1 bis 5, dadurch gekennzeichnet, daß die innere Oberfläche des Mantels (15) der Kappe (16) mit von einer Stirnseite ausgehenden, den Ausnehmungen (26a) entsprechenden, konische Gleitfläche (23) für die Schnäpper (22) des Stopfens (15) ausgestattet ist.

7. Schwimmerschalter nach den Ansprüchen 1 bis 6, dadurch gekennzeichnet, daß jeder Schnäpper (22) aus einem elastisch federnden Streifen gebildet ist, an dessen freiem verdichten Ende zurückspringende Widerlagerflächen (23a) vorstehen, die hinter entsprechende Rastkanten - (27) des Mantels (25) fassen.

8. Schwimmerschalter nach den Ansprüchen 1 bis 7, dadurch gekennzeichnet, daß der Eintrittsbereich des Kabels (12, 30, 16, 14) mit einer aufgespritzten Knickschutztülle aus elastischem Kunststoff dichtend umgeben ist.

9. Schwimmerschalter nach den Ansprüchen 1 bis 8, dadurch gekennzeichnet, daß der Stopfen - (15) und die Kappe (16) Kunststoffteile sind.

Fig.1

Fig.2

Fig.3

Fig.4

# Fig.5

27  26a
26
25  24

16  26  26a  27

# Fig.6

25  27
28  26a
26
24
28
28

16

# Fig.7

VI
25  26
28
26a
26a
VI  28
16

0 231 782

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-3 420 149 (G. REICHENSPERGER) * Ansprüche 1,7-9; Seite 9, Zeile 23 - Seite 11, Zeile 12; Figuren 3-5 * | 1,8,9 | H 01 H 35/18 H 02 G 15/013 |
| | --- | | |
| A | EP-A-0 151 663 (NORDSEE PUMPENFABRIK GMBH) * Anspruch 1; Figuren 1,5 * | 1 | |
| | --- | | |
| A | DE-U-7 604 668 (G. REICHENSPERGER) * Seite 3, Absätze 3,4; Figur 2 * | 1 | |
| | ----- | | |

| RECHERCHIERTE SACHGEBIETE (Int. Cl.4) |
|---|
| H 01 H 35/00 H 02 G 15/013 |

Der vorliegende Recherchenbericht wurde für alle Patentansprüche erstellt.

| Recherchenort | Abschlußdatum der Recherche | Prüfer |
|---|---|---|
| BERLIN | 31-03-1987 | RUPPERT W |